# EUROPEAN PATENT SPECIFICATION

(11) **EP 2 548 436 B1**
(45) Date of publication and mention of the grant of the patent: **20.04.2016**
(21) Application number: 11756491.4
(22) Date of filing: 10.01.2011
(51) Int. Cl.: A01K 13/00, A01K 29/00, A23K 50/40, A23K 40/30

(54) **MULTIFUNCTIONAL CHEWING GUM FOR A PET AND METHOD FOR PREPARING SAME**
MULTIFUNKTIONELLES KAUGUMMI FÜR EIN TIER UND VERFAHREN ZU DESSEN HERSTELLUNG
GOMME À MÂCHER MULTIFONCTION POUR ANIMAUX DE COMPAGNIE ET SON PROCÉDÉ DE PRÉPARATION

(30) Priority: 18.03.2010 KR 20100024426
(43) Date of publication of application: 23.01.2013
(73) Proprietor: Forcans Inc., Anseong-si Gyeonggi-do 456-380 (KR)
(72) Inventor: KOO, Bon Gil, Anseong-si Gyeonggi-do 456-380 (KR); LEE, Myung Jin, Anseong-si Gyeonggi-do 456-824 (KR); CHON, Chan Mi, Anseong-si Gyeonggi-do 456-370 (KR)
(74) Representative: Herzog, Fiesser & Partner Patentanwälte PartG mbB
(86) International application number: PCT/KR2011/000144
(87) International publication number: WO 2011/115360

(56) References cited:
- WO-A1-2008/014000
- JP-A- 5 255 055
- JP-A- 2007 325 520
- KR-A- 20070 041 420
- US-A1- 2006 081 195
- US-A1- 2006 188 611
- US-A1- 2006 193 959
- US-A1- 2008 063 775
- US-A1- 2010 047 397

## Description

### Technical Field

The present invention relates to a multifunctional chewing gum for removing plaque of a pet, and a method of manufacturing the same.

### Background Art

It is very important for the health that a pet's teeth not be coated with tartar and that the tartar be removed from a pet's teeth.

Plaque makes a pet's teeth yellow, and tartar collects on the gums and causes the teeth to come out or causes gum disease. In particular, pets cannot brush their teeth in order to protect their mouth, it is not easy to allow a person to brush a pet's teeth, and persons dislike this work. Even when a person brushes a pet's teeth, pets swallow toothpaste because they cannot rinse or spit out toothpaste.

As a veterinary treatment method for removing a pet's plaque or tartar, there is scaling. However, a pet's teeth must be anesthetized prior to scaling. Such a veterinary treatment method needs high cost, and owners of pets do not like this method, so new treatment methods easier than this method are required.

The mechanical actions of a pet's teeth, such as chewing, biting and the like, serve to abrade a pet' teeth, thus reducing or removing plaque and tartar. This is disclosed in Patent document 1 or 2. However, when a pet chews an animal's leather or bone, its teeth are damaged or broken. Therefore, when the pet swallows it, this may expose the pet to danger.

Moreover, conventionally, various types of formulations for delaying the formation of a pet's tartar or removing the formed tartar have been proposed. Among them, the formulation for mechanically removing tartar from animal's teeth has been provided in the form of hard chewing gum. For example, Patent document 1 discloses chewing gum for a pet, which is functional chewing gum for cleaning a pet's teeth, and which is provided therein with one or more spaces for accommodating toothpaste, vermicides or nutrients of a pet, and which includes protrusions or seams formed on the surface thereof

Recently, edible chewing gum made by press-molding gluten, starch or the like has been used (refer to Patent document 4). It was reported that pieces of this edible chewing gum were frequently swallowed by pet dogs because of the hardness and material characteristics of the edible chewing gum and the food ingestion manner of a pet, and animals having swallowed this edible chewing gum took diseases, such as indigestion and the like, or died. Therefore, such edible chewing gum can be very dangerous because it is used only in a mechanic manner. Accordingly, it is required to develop chewing gum for a pet, which is easy to digest and is safe.

### [Cited references]

### [Patent documents]

(Patent document 1) US4802444 B2
(Patent document 2) KR20-0384299 B2
(Patent document 3) KR20-0334717 B2
(Patent document 4) WO2003-075644 A1

WO 2008/014000 A1 relates to the production of uncoated, starch-based chewable articles for pets comprising starch, a plasticizer, a humectant and water.

US 2010/047397 A1 relates to a coated pet chew comprising a coated substrate. The substrate is formed from rawhide; the coating is made of unrefined collagen.

### Disclosure

### Technical Problem

Thus, in order to solve the above-mentioned problems, the present inventors created a puffed food having high moisture retention by injection molding, and coated the surface of the puffed food, thus removing plaque, tartar and bad breath from a pet. Based on this finding, the present invention was completed. The term "pet" used in the present invention generally means dog, cat or the like, but is not limited thereto. The concept of a pet includes other carnivorous animals.

Accordingly, an object of the present invention is to provide multifunctional chewing gum for a pet, which can remove plaque, tartar and bad breath from a pet.

Another object of the present invention is to provide a method of manufacturing the multifunctional chewing gum for a pet.

### Technical Solution

In order to accomplish the above objects, a first aspect of the present invention provides multifunctional chewing gum for removing plaque of a pet, in which a porous molded material, including 40 ~ 80 wt% of starch, 2 ~ 15 wt% of sugar, 3 ~ 25 wt% of a humectant and a remainder of solvent, is coated with a coating solution, including 0.5 ~ 20 wt% of at least one coating agent and a remainder of solvent.

In the first aspect of the present invention, the porous molded material further includes at least one additive selected from the group consisting of 1 ~ 30 wt% of a palatability improver, 0.01 ~ 3 wt% of a tartar remover, 0.01 ~ 10 wt% of a nutrient, 0.01 ~ 10 wt% of an antimicrobial component, and 0.01 ~ 10 wt% ofa spice.

In the first aspect of the present invention, the starch is at least one selected from the group consisting of corn starch, potato starch, sweet potato starch, tapioca starch, wheat starch, gluten, brown rice powder, oat powder, soybean starch, and barley starch.

In the first aspect of the present invention, the sugar is at least one selected from the group consisting of isomalto-oligosaccharide, fracto-oligosaccharide, galacto-oligosaccharide, soybean oligosaccharide, maltitol, sorbitol, mannitol, lactitol, erythritol, and malto-oligosaccharide.

In the first aspect of the present invention, the humectant is at least one selected from the group consisting of palm oil, olive oil, soybean oil, corn oil, rapeseed oil, rice kernel oil, grape seed oil, sun flower seed oil, and palm kernel hardened oil.

In the first aspect of the present invention, the coating solution further includes at least one additive selected from the group consisting of 1 ~ 30 wt% of a palatability improver, 0.01 ~ 3 wt% of a tartar remover, 0.01 ~ 10 wt% of a nutrient, 0.01 ~ 10 wt% of an antimicrobial component, and 0.01 ~ 10 wt% ofa spice.

In the first aspect of the present invention, the palatability improver is at least one selected from beef powder, pork powder, mutton powder, chicken powder, egg yolk, whole egg, eggwhite, and MDCM.

In the first aspect of the present invention, the tartar remover is at least one selected from zinc nitrate, zinc sulfate, zinc citrate, zinc chloride, zinc acetate, zinc gluconate, pyrophosphate, tripolyphosphate, hexamethaphosphate, and polyphosphate

In the first aspect of the present invention, the nutrient is selected from vitamins, calcium gluconate and mixtures thereof.

In the first aspect of the present invention, the coating agent is at least one selected from the group consisting of gelatin, xanthan gum, sodium carboxymethyl cellulose, carrageenan, agar, alginic acid, and methylcellulose.

In the first aspect of the present invention, the porous molded material has a moisture content of 10 ~ 14%, and the coated porous molded material has a surface hardness of 15 ~ 50A and a coating thickness of 0.05 ~ 3 mm.

In order to accomplish the above objects, a second aspect of the present invention provides a method of manufacturing multifunctional chewing gum for removing plaque of a pet, comprising the steps of mixing 40 ~ 80 wt% of starch, 2 ~ 15 wt% of sugar, 3 ~ 25 wt% of humectants and a remainder of solvent to make a mixture; puffing and extruding the mixture in a desired shape to provide a porous molded material; providing a coating solution including 3 ∼ 20 wt% of at least one coating agent selected from the group consisting of gelatin, xanthan gum, sodium carboxymethyl cellulose, carrageenan, agar, alginic acid and methyl cellulose, and a remainder of solvent; coating the porous molded material with the coating solution; and drying the coated porous molded material, wherein the porous molded material has a moisture content of 10 ∼ 14%, and the coated porous molded material has a surface hardness of 15 ∼ 50A and a coating thickness of 0.05 ∼ 3 mm.

In the second aspect of the present invention, the humectant is at least one selected from the group consisting of palm oil, olive oil, soybean oil, corn oil, rapeseed oil, rice kernel oil, grape seed oil, sun flower seed oil, palm kernel hardened oil, propyleneglycol, glycerin, sorbitol, and glucose.

In the second aspect of the present invention, the coating agent is at least one selected from the group consisting of gelatin, xanthan gum, sodium carboxymethyl cellulose, carrageenan, agar, alginic acid, and methylcellulose.

In the second aspect of the present invention, the step of coating the porous molded material with the coating solution is performed by spraying or dipping.

In the second aspect of the present invention, the coating thickness is 0.05 ~ 3 mm.

### Advantageous Effects

The porous puffed chewing gum for a pet according to the present invention may be used to clean the teeth of a pet, enhance the preservation stability of gums, and preserve (or supply) effective nutrients while functioning as a toy for pets (functioning to relieve stress). Furthermore, porous puffed chewing gum for a pet removes tartar, plaque and bad breath from a pet.

### Best Mode

Hereinafter, the present invention will be described in detail.

The puffed foods for a pet are classified into animal feeds (staple food) and snacks. Various commercially-available animal feeds, which is a staple food of pets, are very small and dry compared to the standard tooth size of pets, and easily crush and break down when they are chewed although they have surface hardness. That is, since they break down at the ends of the teeth of a pet at the time of being chewed, the end of the teeth is abraded, but the center or gum of the teeth may also be influenced by chewing them. Therefore, it cannot be expected to mechanically clean the teeth of a pet.

A large majority of feed providers well recognize that it is important in the health of a pet to remove tartar or prevent the tartar from building up on the teeth of a pet, and that this fact functions as a very important factor in sales. Therefore, they are making an effort to prevent tartar from building up on the teeth of a pet by adding a zinc salt, a phosphoric salt or the like to the feed, and are widely advertising this fact.

Further, since the puffed foods of snacks are larger than animal feeds (the staple food) and have pores larger than those of animal feeds, it can be seen that cleaning can take place from the end of the teeth to the vicinity of the gums of the teeth. However, in terms of the size and standard of pores, cleaning is theoretically possible but is not possible in practice.

That is, at the time a pet chews snacks using the teeth, they are broken into pieces (shattered, smashed, crushed) as soon as external force is applied, so that the effect of cleaning of teeth cannot be expected.

The extrusion-molded puffed foods are very weak in density, that is, texture, because they are porous. For this reason, moisture is easily volatilized from the surface as well as from the center of the puffed food, so that this puffed food breaks into pieces, fragments or scraps even though a weak force applied. These pieces, fragments or scraps make the interior dirty and disorderly, and become hotbeds ofbacteria.

In other words, the hardness of the puffed food appears to be maintained first, but the puffed food is easily broken by physical force with the passage of time. Further, since the puffed food is not tough to such a degree that it reaches the center of the mouth, all the puffed food is broken at the ends of the teeth of a pet when it is chewed in the mouth of the pet, so that the effect of cleaning the vicinity of the gums of the teeth cannot be expected, because these are far from the center ofthe teeth. Consequently, it is possible to abrade only the ends of the teeth of a pet when the puffed food easily breaks compared to when its surface is imparted with hardness.

For this reason, when the extrusion-molded puffed foods are used to clean the teeth of a pet, they are not easily broken only when they must be porous and have suitable indentation hardness. Further, the object of cleaning the teeth can be accomplished when the texture of the puffed foods is tough to the degree that the teeth are induced to reach the center of the puffed food, that is, when mechanical (physical) friction occurs over the entire teeth from the end thereof to the surface (circumference) thereof and the vicinity of the gum thereof

Conventionally puffed foods have been used just as snacks because they cannot maintain indentation hardness although they have the suitable porosity.

Meanwhile, in the present invention, in order to clean the teeth of a pet using a puffed food having suitable hardness and toughness by means of physical friction, the hardness of the puffed food must be maintained until it is actually used. Here, in order to maintain the hardness of the puffed food, the toughness and moisture content of the puffed food must be appropriately maintained over a long period of time. Further, in order to effectively preserve the puffed food, it is very important that the moisture content of the puffed food be suitable. It is preferred that the moisture content ofthe puffed food be 10% to 14%.

Moreover, in order to deeply clean the teeth of a pet, the toughness and hardness of the puffed food must be maintained. In order to satisfy such a requirement, the organization strength between pores in the puffed food must be enhanced, and the moisture content ofthe puffed food must be suitably maintained. Further, in order to continuously maintain this performance over a long period of time, the surface of a molded material must be isolated from the air. For this purpose, the organization strength in the puffed food must be enhanced. Here, when a coating process is additionally performed, it is possible to prevent the puffed food from breaking, and the surface hardness of the puffed food can be improved, thus increasing the physical or mechanical friction.

As such, in order to obtain the desired physical or mechanical friction of the molded material of the present invention, starch is used in an amount of 40 ~ 80 wt%. In the present invention, the starch may be at least one selected from the group consisting of corn starch, potato starch, sweet potato starch, tapioca starch, wheat starch, gluten, brown rice powder, oat powder, soybean starch, and barley starch. When the amount of starch is less than 40 wt%, the desired surface hardness cannot be obtained, and, when the amount thereof is more than 80%, the hardness ofthe molded material becomes low, and the puffed state of the molded material is not good.

Further, in order to improve the organization strength of the molded material and to provide adhesion stability and sweetness to the molded material, sugar is used in an amount of 2 ~ 15 wt%. The sugar may be at least one selected from the group consisting of isomalto-oligosaccharide, fracto-oligosaccharide, galacto-oligosaccharide, soybean oligosaccharide, maltitol, sorbitol, mannitol, lactitol, erythritol, and malto-oligosaccharide. When the amount of sugar is less than 2 wt%, the organization strength and adhesivity of the molded material deteriorates. Further, when the amount thereof is more than 15 wt%, the moisture content of the molded material increases, so that the surface hardness thereof deteriorates, and the puffed state thereof is not good.

In order to improve the moisture retention and organization strength of the molded material of the present invention, a humectant is used in an amount of 3 ~ 25 wt%. The humectant may be at least one selected from the group consisting of palm oil, olive oil, soybean oil, corn oil, rapeseed oil, rice kernel oil, grape seed oil, sun flower seed oil, palm kernel hardened oil, propyleneglycol, glycerin, sorbitol, and glucose. When the amount of the humectant is less than 3 wt%, the moisture retention effect thereof is scarcely exhibited, and the adhesion thereof deteriorates. Further, when the amount thereof is more than 25 wt%, the moisture content thereof increases, so that the adhesion between tissues thereof deteriorates, and the surface hardness thereofbecomes low.

According to the present invention, the composition composed of the above components is mixed with water, and then the mixture is extruded and puffed in the desired shape at a temperature of 100 °C or more, preferably, 120 ~ 150°C to prepare a porous molded material. In this case, it is preferred that the moisture content of the porous molded material be 10 ~ 14%. When the moisture content thereof is less than 10%, the porous molded material becomes excessively dry, so that the elasticity thereof becomes low, with the result that the porous molded material is easily broken and cannot exhibit the desired texture. Further, when the amount thereof is more than 14%, the moisture content thereof increases, so that the surface hardness thereof deteriorates and the tissues thereof are easily smashed, with the result that the effect expected from brushing the teeth cannot be obtained, and the preservation stability thereof deteriorates.

Subsequently, the porous molded material is coated with a coating solution in order to increase the external strength thereof and prevent moisture from permeating the porous molded material. The reason why the external strength of the porous molded material is increased is that, when the porous molded material is indented by the teeth of a pet, it is possible to prevent the indented portion of the porous molded material from being broken or severed by the edge of the teeth, and the other portion thereof is maintained without being indented to easily clean the teeth, thereby removing the plaque and tartar attached to the teeth. For this purpose, the porous molded material must maintain a suitable degree of hardness. Therefore, in order to allow the teeth to deeply penetrate the coated porous molded material, the surface hardness thereof may be 15 ~ 50A. The surface hardness thereof was measured using the TECLOCK DU ROMETER (GS-702G TYPE D, manufactured by TECLOCK Corporation in Japan).

Further, the coating of the porous molded material is performed in order to prevent the moisture loss, moisture absorption and air permeation of the porous molded material, thus preventing the weight reduction and damage of the porous molded material, to maintain the quality thereof, and to apply a gloss to the surface thereof, thereby increasing the value of a product.

The coating solution includes 3 ~ 20 wt% of a coating agent and a remainder of solvent (preferably, water). The coating agent may be at least one selected from the group consisting of gelatin, xanthan gum, sodium carboxymethyl cellulose, carrageenan, agar, alginic acid, and methylcellulose. As the coating agent, gelatin is a protein made by partially hydrolyzing collagen which is a protein constituting the connective tissues of animals, and is used as the raw material of low-calorie foods. Further, gelatin emits a meat juice smell and has a meat juice taste, is used in the form of a powder, and is used for surface coating in order to prevent foods from absorbing moisture and becoming dry. When the amount of the coating agent (diluted) is less than 0.5 wt%, the concentration of the coating solution is excessively low, so that it takes a very long time to perform the coating process. Further, when the amount thereof is more than 20 wt%, the concentration of the coating solution is excessively high, so that the coating solution is hardened, with the result that the surface of the coated porous molded material is not even, workability deteriorates, and the quality of a product deteriorates.

Meanwhile, moisture loss relates closely to coating thickness. When the coating thickness decreases, it is difficult to prevent moisture from being volatilized from the porous molded material, and, when the coating thickness increases, the hardness of the porous molded material increases, but the elasticity thereof cannot be maintained. The coating thickness may be 3 mm or less, preferably, 0.1 ~ 2 mm. The concentration of the coating solution may be 1 ~ 20%, preferably, 3 ~ 20%.

According to the present invention, the coating of the porous molded material can be performed using spray coating or dip coating. The spray coating is a metho d of uniformly spraying a coating solution through a nozzle, and can thinly and uniformly coat the surface ofthe porous molded material with the coating solution. Specifically, spray coating is a method of spraying the coating solution onto the porous molded material through a spray nozzle when the viscosity of the coating solution is low, and can uniformly apply the coating solution onto the porous molded material even when the surface of the porous molded material is irregular or uneven.

The spray coating may include airless spray coating, air spray coating and multiple spray coating according to the shape of a spray nozzle. In airless spray coating, the coating solution is supplied to a nozzle at high pressure, and then the coating solution is sprayed out through the nozzle. In this case, the coating solution is sprayed in the form of droplets. Meanwhile, multiple spray coating is used when two or more kinds of coating materials are used. In multiple spray coating, internal mixing or external mixing is used according to the properties of each coating material. The spray coating is advantageous compared to the dip coating because a small amount of a coating agent is used and the amount of a solvent for volatilizing the coating agent is reduced to easily dry the coating solution.

Dip coating, unlike spray coating in which only the surface of the porous molded material is coated, is advantageous in that the coating solution deeply permeates into the porous molded material, thus improving the physical properties of the surface thereof as well. Dip coating is used when the coating thickness need not be adjusted accurately or the surface of the porous molded material is uneven. Dip coating is performed in consideration of the ratio, amount or the like ofthe coating agent. In dip coating, the porous molded material is dipped into the coating solution for a predetermined amount of time, and then passes through several conveyors to dry the surface thereof Dip coating is advantageous compared to the spray co ating because the coating solution deeply permeates into the porous molded material, so that the surface thereof can be reformed and can be uniformly coated.

Meanwhile, in order to increase the palatability of the multifunctional chewing gum of the present invention, the porous molded material and/or the coating solution may further include at least one additive selected from the group consisting of 1 ~ 30 wt% of a palatability improver, 0.01 ~ 3 wt% of a tartar remover, 0.01 ~ 10 wt% of a nutrient, 0.01 ~ 10 wt% of a antimicrobial component, and 0.01 ~ 10 wt% of a spice.

The palatability improver may be at least one selected from beef powder, pork powder, mutton powder, chicken powder, egg yolk, whole egg, egg white and MDCM, and may be used in an amount of 5 ~ 30 wt%. When the amount of the palatability improver is less than 1 wt%, the effect of improving the palatability of the multifunctional chewing gum is scarcely exhibited. Further, when the amount thereof is more than 30 wt%, the palatability thereof increases, but the adhesion and texture thereof deteriorates and the surface hardness thereof decreases.

Further, as the tartar remover for accelerating the removal of tartar, the prevention of tartar deposition and the relaxation of inflammation, zinc salts or phosphoric salts may be used. The zinc salts may include zinc nitrate, zinc sulfate, zinc citrate, zinc chloride, zinc acetate, zinc gluconate. The phosphoric salts may include pyrophosphate, tripolyphosphate, hexamethaphosphate, and combinations thereof When the amount of the tartar remover is less than 0.01 wt%, the effect of removing tartar is scarcely exhibited. Further, when the amount thereof is more than 3 wt%, the effect of removing tartar is not great depending on the increase in the amount thereof, and unfavorable side effects may be produced by the excess ingestion of the multifunctional chewing gum.

According to the present invention, in order to provide nutrition to teeth and mouth muscosae, nutrients, such as vitamins (vitamin B, etc.), calcium gluconate and the like, may be added. Further, for the purpose of antibacterial activity and inflammation prevention, chitosan, a green tea extract or a mixture thereof may be used in an amount of 0.01 ~ 10 wt%. When the amount thereof is less than 0.01 wt%, the effect of the addition thereof is scarcely exhibited. Further, when the amount thereof is more than 10 wt%, the effect of the addition thereof is not great relative to the increase in the amount thereof, and unfavorable side effects may ensue upon the ingestion of an excessive amount of the multifunctional chewing gum.

Further, in order to make the appearance of a final product look good, improve the quality thereof and increase the taste thereof, edible colors or edible spices may be added to the porous molded material or the coating solution.

### Mode for Invention

Hereinafter, the present invention will be described in more detail with reference to the following Examples. However, the scope of the present invention is not limited to these Examples.

### Comparative Example 1

30 wt% of corn starch, 30 wt% of wheat starch, 1.0 wt% of wheat gluten, 1.0 wt% of isomalto-oligosaccharide, 10 wt% of chicken powder, 0.1 wt% of a color and 0.5 wt% of an apple spice were mixed with purified water (27. 4 wt%), and then the mixture was puffed and extruded at about 130°C to form a molded material having a bone-like shape, and then the molded material was dried to obtain a sample having a size of 12cm×3cm×3cm. Subsequently, the surface hardness and moisture content of the sample were measured using a hardness meter (Durometer). As a result, the surface hardness thereof was 7A, and the moisture content thereof was 11.38%.

### Comparative Example 2

A sample having a surface hardness of 10A and a moisture content of 11.55% was obtained in the same manner as in Comparative Example 1, except that 2.0 wt% ofwheat gluten and 2.0 wt% of isomalto-oligosaccharide were used.

### Comparative Example 3

A sample having a surface hardness of 15A and a moisture content of 11.67% was obtained in the same manner as in Comparative Example 1, except that 4.0 wt% ofwheat gluten and 4.0 wt% of isomalto-oligosaccharide were used.

### Comparative Example 4

A sample having a surface hardness of 19A and a moisture content of 11.84% was obtained in the same manner as in Comparative Example 1, except that 6.0 wt% ofwheat gluten and 6.0 wt% of isomalto-oligosaccharide were used.

### Comparative Example 5

A sample having a surface hardness of 21A and a moisture content of 11.36% was obtained in the same manner as in Comparative Example 1, except that 8.0 wt% ofwheat gluten and 8.0 wt% of isomalto-oligosaccharide were used.

### Comparative Example 6

A sample having a surface hardness of 7A and a moisture content of 11.28% was obtained in the same manner as in Comparative Example 1, except that 1.0 wt% of soybean oil was additionally used.

### Comparative Example 7

A sample having a surface hardness of 10A and a moisture content of 11.81% was obtained in the same manner as in Comparative Example 2, except that 2.0 wt% of soybean oil was additionally used.

### Comparative Example 8

A sample having a surface hardness of 14A and a moisture content of 11.88% was obtained in the same manner as in Comparative Example 3, except that 3.5 wt% of soybean oil was additionally used.

### Comparative Example 9

A sample having a surface hardness of 17A and a moisture content of 11.01% was obtained in the same manner as in Comparative Example 4, except that 5.5 wt% of soybean oil was additionally used.

### Comparative Example 10

A sample having a surface hardness of 11A and a moisture content of 11.69% was obtained in the same manner as in Comparative Example 5, except that 8.0 wt% of soybean oil was additionally used.

### Example 1

30 wt% of corn starch, 30 wt% of wheat starch, 6.0 wt% of wheat gluten, 6.0 wt% of isomalto-oligosaccharide, 10 wt% of chicken powder, 5.5 wt% of soybean oil, 0.1 wt% of a color and 0.5 wt% of an apple spice were mixed with a remainder ofpurified water, and then the mixture was puffed and extruded at about 130□ to form a molded material having a bone-like shape, and then the molded material was dried to obtain a sample. Subsequently, 6.0 wt% of gelatin, 0.8 wt% of vitamin B₆, 0.8 wt% of calcium gluconate, 0.8 wt% of chitosan and 3.0 wt% of chicken powder were mixed with a remainder of purified water to prepare a coating solution. Subsequently, the sample was entirely uniformly coated with a coating solution by dip coating, and then cooled and dried to manufacture chewing gum for a pet according to the present invention. As a result, the surface hardness of the chewing gum was 36A, and the moisture content thereof was 11.30%.

### Example 2

### <Selection of target animal>

Pet beagle dogs of 24 months were inspected and explored in order to ascertain the history of oral diseases thereof As a result, 12 dogs having teeth coated with plaque and tartar were selected as target animals for testing.

### <Test condition>

12 dogs took moderate exercise at the same comfortable place which is well-lit and well-ventilated while providing a predetermined amount of artificial feed in the morning and evening for 4 weeks. This program was carried out in the same manner throughout the test period.

### <Inspection and evaluation methods>

The effect of hardness maintenance and the effect of removing plaque and tartar from teeth were evaluated. The evaluation methods are as follows.

### # Evaluation method 1

### Pressurized rupture test

The indented and ruptured states of each of samples of Examples and Comparative Examples were observed using a rupture meter when predetermined force was applied to each of the samples. Each of the samples was gradually pressurized using a rod whose end is as pointed as the end of teeth of a pet under a pressure of 80 kg, which is the minimum chewing force of the chewing forces (80 ~ 150 kg) of pets (weight: 5 ~ 20 kg), and then the indented and ruptured states of each of the samples were observed. The results thereof are given in Table 1 below.

### # Evaluation method 2

### Isothermal drying test

1) Each sample was dried at 37°C for 63 hours using a thermostat bath, and then the moisture content thereof was measured using a moisture meter. 2) Each sample was exposed to the air at a temperature of 20°C (room temperature) and a relative humidity of 60% for 63 hours, and then the moisture content thereof was measured using a moisture meter. The results thereof are given in Table 2 below.

### # Evaluation method 3

### Observation of residual tartar

The change in state of each sample before and after the test was observed with an optical macro camera and then evaluated. Samples were provided to test animals in the morning and afternoon twice a day for 3 months (a total 180 times), the teeth of test animals were observed, and then the amounts of tartar remaining on the teeth thereof before and after samples were used were compared and evaluated. The results thereof are given in Table 3 below.

**[Table 1]**

| Items | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Rupture/indentation state¹⁾ | instantly ruptured | instantly ruptured | instantly ruptured | slightly indented | slightly indented | slightly indented |
| Items | Comp. Ex. 7 | Comp. Ex. 8 | Comp. Ex. 9 | Comp. Ex. 10 | Ex. 1 | - |
| Rupture/indentation state¹⁾ | slightly indented | middle indented | non-ruptured | non-ruptured | non-ruptured | - |

| | | | | | | |
|---|---|---|---|---|---|---|
| ¹⁾Standards of evaluation of rupture and indentation of the samples are as follows. * Instantly ruptured: sample was ruptured into two pieces or more as soon as force was applied to the sample. * Slightly indented: sample was ruptured after a rod penetrated the sample 1/3 of the way through. * Middle indented: sample was ruptured after a rod penetrated the sample 1/2 of the way through. * Non-ruptured: sample was not ruptured even after a rod completely transected the sample. | | | | | | |

**[Table 2]**

| Items | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Moisture content (thermostat bath) | 4.90 | 4.26 | 4.37 | 4.28 | 4.88 | 4.75 |
| Moisture content (exposed to air) | 7.94 | 7.81 | 7.88 | 7.01 | 7.68 | 7.91 |

| Items | Comp. Ex. 7 | Comp. Ex. 8 | Comp. Ex. 9 | Comp. Ex.10 | Ex. 1 | - |
|---|---|---|---|---|---|---|
| Moisture content (thermostat bath) | 4.39 | 4.49 | 4.78 | 4.93 | 10.81 | - |
| Moisture content (exposed to air) | 8.01 | 7.84 | 7.69 | 8.04 | 11.38 | - |

Table 1 shows the results of the pressurized rupture test, and Table 2 shows the results of an isothermal drying test. The evaluation of the test results is as follows.

Referring to Table 1 above, it can be ascertained that samples of Comparative Examples 1 to 3 were instantly ruptured into two pieces or more as soon as force was applied to the sample because they had low organization strength, and that samples of Comparative Examples 4 to 5 were not instantly ruptured and were slightly indented because they had relatively high organization strength. Further, referring to Table 1 above, it can be ascertained that samples of Comparative Examples 6 to 8 were slightly indented and then ruptured immediately because they had low moisture content and included a small amount of a humectant (organization strength improver) and thus they did not have suitable organization strength compared to the samples of Comparative Examples 1 to 3. Further, it can be ascertained that a sample of Comparative Example 9 was able to be used to deeply clean the teeth because it had suitable moisture content and included a suitable amount of a humectant (organization strength improver) and thus its hardness was appropriately maintained, but the performance thereof was difficult to maintain for a long period of time because it was sensitive to external humidity as shown in Table 2 above.

Meanwhile, it can be ascertained that a sample of Comparative Example 9 having high moisture content and including an excess amount of a humectant (organization strength improver) was not ruptured, however, the organization strength thereof became loose due to the excess amount of humectant, and thus the hardness thereof rapidly deteriorated, so that this sample became soft to such a degree that its organization strength did not reach mechanical friction, thereby this sample is not suitable for cleaning teeth.

Consequently, it can be ascertained that the sample of Example 1 was sufficiently suitable and could be used to deeply clean the teeth because this sample was obtained by forming a film on the sample of Comparative Example 9, thus preventing moisture (which is a major component serving to enhance organization strength) from being discharged to the outside and increasing the surface hardness, and that the sample of Example 1 was able to maintain its performance for a long period of time, as shown in Table 2.

**[Table 3]**

| Items | Comp. Ex. 9 | | | | Comp. Ex. 10 | | | | Ex. 1 | | | |
|---|---|---|---|---|---|---|---|---|---|---|---|---|
| | group A (test animals) | | | | group B (test animals) | | | | group C (test animals) | | | |
| | A1 | A2 | A3 | A4 | B1 | B2 | B3 | B4 | C1 | C2 | C3 | C4 |
| Residual tartar¹⁾ | 38 | 26 | 44 | 32 | 4 | 8 | 8 | 0 | 60 | 80 | 90 | 80 |

| | | | | | | | | | | | | |
|---|---|---|---|---|---|---|---|---|---|---|---|---|
| ¹⁾ Standards of evaluation ofresidual tartar are given in Table 4 below. | | | | | | | | | | | | |

**[Table 4]**

| Determination standard | Score |
|---|---|
| Removed 50% or more | 10 |
| Removed below 50% | 5 |
| Removed below 20% | 2 |
| Not changed | 0 |

| | |
|---|---|
| 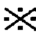 The determination of the tartar-removed state was performed by selecting five pet experts (veterinarians, pet handlers or professional researchers) as examiners, evaluating the change in states of the samples, scoring each of the samples by 20 points per examiner and then summing up the points. | |

According to Table 3, it can be understood that the plaque and tartar existing in the mouth of a pet can be effectively removed when the chewing gum can be deeply indented to the vicinity of the gum of teeth of a pet, and when the chewing gum has suitable surface hardness and organization strength, thus causing physical friction.

## Claims

1. Multifunctional chewing gum for removing plaque of a pet, in which a porous molded material, comprising 40 ~ 80 wt% of starch, ~ 15 wt% of sugar, 3 ~ 25 wt% of a humectant and a remainder of a solvent, is coated with a coating solution, comprising 0.5 ~ 20 wt% of at least one coating agent selected from the group consisting of gelatin, xanthan gum, sodium carboxymethyl cellulose, carrageenan, agar, alginic acid and methylcellulose and a remainder of a solvent, wherein the porous molded material has a moisture content of 10 - 14%, and the coated porous molded material has a surface hardness of 15 ~ 50A and a coating thickness of 0.05 ~ 3 mm.

2. The multifunctional chewing gum for removing plaque of a pet according to claim 1, wherein the porous molded material further comprises at least one additive selected from the group consisting of: 1 ~ 30 wt% of at least one palatability improver selected from beef powder, pork powder, mutton powder, chicken powder, egg yolk, whole egg, egg white and MDCM; 0.01 ~ 3 wt% of at least one tartar remover selected from zinc nitrate, zinc sulfate, zinc citrate, zinc chloride, zinc acetate, zinc gluconate, pyrophosphate, tripolyphosphate, hexamethaphosphate and polyphosphate; 0.01 - 10 wt% of a nutrient selected from vitamins, calcium gluconate and mixtures thereof; 0.01 - 10 wt% of an antimicrobial component selected from chitosan, green tea extracts and mixtures thereof; and 0.01 ~ 10 wt% of a spice.

3. The multifunctional chewing gum for removing plaque of a pet according to claim 1, wherein the starch is at least one selected from the group consisting of corn starch, potato starch, sweet potato starch, tapioca starch, wheat starch, gluten, brown rice powder, oat powder, soybean starch, and barley starch.

4. The multifunctional chewing gum for removing plaque of a pet according to claim 1, wherein the sugar is at least one selected from the group consisting of isomalto-oligosaccharide, fractooligosaccharide, galacto-oligosaccharide, soybean oligosaccharide, maltitol, sorbitol, mannitol, lactitol, erythritol, and malto-oligosaccharide.

5. The multifunctional chewing gum for removing plaque of a pet according to claim 1, wherein the humectant is at least one selected from the group consisting of palm oil, olive oil, soybean oil, corn oil, rapeseed oil, rice kernel oil, grape seed oil, sun flower seed oil, and palm kernel hardened oil.

6. The multifunctional chewing gum for removing plaque of a pet according to claim 1, wherein the coating solution further comprises at least one additive selected from the group consisting of: 1 ~ 30 wt% of at least one palatability improver selected from beef powder, pork powder, mutton powder, chicken powder, egg yolk, whole egg, eggwhite and MDCM; 0.01 ~ 3 wt% of at least one tartar remover selected from zinc nitrate, zinc sulfate, zinc citrate, zinc chloride, zinc acetate, zinc gluconate, pyrophosphate, tripolyphosphate, hexamethaphosphate and polyphosphate; 0.01 ~ 10 wt% of a nutrient selected from vitamins, calcium gluconate and mixtures thereof; 0.01 ~ 10 wt% of an antimicrobial component selected from chitosan, green tea extracts and mixtures thereof; and 0.01 ~ 10 wt% of a spice.

7. A method of manufacturing a multifunctional chewing gum for removing plaque of a pet, comprising the steps of:
mixing 40 ~ 80 wt% of starch, ~ 15 wt% of sugar, 3 ~ 25 wt% of humectants and a remainder of a solvent to make a mixture;
puffing and extruding the mixture into a desired shape to provide a porous molded material;
providing a coating solution including 3 ~ 20 wt% of at least one coating agent selected from the group consisting of gelatin, xanthan gum, sodium carboxymethyl cellulose, carrageenan, agar, alginic acid and methylcellulose, and a remainder of a solvent;
coating the porous molded material with the coating solution; and
drying the coated porous molded material,
wherein the porous molded material has a moisture content of 10 ~ 14%, and the coated porous molded material has a surface hardness of 15 ~ 50A and a coating thickness of 0.05 ~ 3 mm.

8. The method of manufacturing a multifunctional chewing gum for removing plaque of a pet according to claim 7, wherein the humectant is at least one selected from the group consisting of palm oil, olive oil, soybean oil, corn oil, rapeseed oil, rice kernel oil, grape seed oil, sun flower seed oil, and palm kernel hardened oil.

9. The method of manufacturing a multifunctional chewing gum for removing plaque of a pet according to claim 7, wherein the puffing temperature is 100 ~ 150°C.

## Patentansprüche

1. Multifunktioneller Kaugummi zum Entfernen von Plaque eines Haustieres, in welchem ein poröses ausgeformtes Material mit 40 ~ 80 Gew.-% an Stärke, ~ 15 Gew.-% an Zucker, 3 ~ 25 Gew.-% eines Feuchthaltemittels und einem Restbestandteil an einem Lösungsmittel mit einer Beschichtungslösung beschichtet ist, welche 0,5 ~ 20 Gew.-% an zumindest einem Beschichtungsmittel enthält, das ausgewählt ist aus der Gruppe bestehend aus Gelatine, Xanthan, Natriumcarboxymethylcellulose, Karrageen, Agar, Alginsäure und Methylcellulose und einem Restbestandteil an einem Lösungsmittel, wobei das poröse ausgeformte Material einen Feuchtigkeitsgehalt von 10 ~ 14% aufweist, und das beschichtete poröse ausgeformte Material eine Oberflächenhärte von 15 ~ 50A und eine Beschichtungsdicke von 0,05 ~ 3 mm aufweist.

2. Multifunktioneller Kaugummi zum Entfernen von Plaque eines Haustieres nach Anspruch 1, wobei das poröse ausgeformte Material ferner zumindest ein Additiv enthält, das ausgewählt ist aus der Gruppe bestehend aus: 1 ~ 30 Gew.-% von zumindest einem Geschmacksverstärker ausgewählt aus Rindfleischpulver, Schweinefleischpulver, Lammfleischpulver, Hähnchenfleischpulver, Eigelb, ganzes Ei, Eiweiß und MDCM, 0,01 - 3 Gew.-% von zumindest einem Zahnsteinentferner ausgewählt aus Zinknitrat, Zinksulfat, Zinkcitrat, Zinkchlorid, Zinkacetat, Zinkgluconat, Pyrophosphat, Tripolyphosphat, Hexamethaphosphat und Polyphosphat; 0,01 - 10 Gew.-% eines Nährstoffes ausgewählt aus Vitaminen, Calciumgluconat und Mischungen davon; 0,01 - 10 Gew.-% eines antimikrobiellen Bestandteils ausgewählt aus Chitosan, Extrakten grünen Tees und Mischungen davon; und 0,01 - 10 Gew.-% eines Gewürzes.

3. Multifunktioneller Kaugummi zum Entfernen von Plaque eines Haustieres nach Anspruch 1, wobei die Stärke zumindest eine ausgewählt aus der Gruppe bestehend aus Maisstärke, Kartoffelstärke, Süßkartoffelstärke, Tapiokastärke, Weizenstärke, Gluten, Naturreispulver, Haferpulver, Sojabohnenstärke und Gerstenstärke ist.

4. Multifunktioneller Kaugummi zum Entfernen von Plaque eines Haustieres nach Anspruch 1, wobei der Zucker zumindest einer ausgewählt aus der Gruppe bestehend aus Isomaltooligosaccharid, Fructooligosaccharid, Galactooligosaccharid, Sojabohnenoligosaccharid, Maltit, Sorbit, Mannit, Lactit, Erythrit und Maltooligosaccharid ist.

5. Multifunktioneller Kaugummi zum Entfernen von Plaque eines Haustieres nach Anspruch 1, wobei das Feuchthaltemittel zumindest eines ausgewählt aus der Gruppe bestehend aus Palmöl, Olivenöl, Sojabohnenöl, Maisöl, Rapsöl, Reiskernöl, Traubenkernöl, Sonnenblumenkernöl und gehärtetem Palmkernöl ist.

6. Multifunktioneller Kaugummi zum Entfernen von Plaque eines Haustieres nach Anspruch 1, wobei die Beschichtungslösung zumindest ein Additiv enthält, das ausgewählt ist aus der Gruppe bestehend aus: 1 ~ 30 Gew.-% von zumindest einem Geschmacksverstärker ausgewählt aus Rindfleischpulver, Schweinefleischpulver, Lammfleischpulver, Hähnchenfleischpulver, Eigelb, ganzes Ei, Eiweiß und MDCM; 0,01 ~ 3 Gew.-% von einem Zahnsteinentferner ausgewählt aus Zinknitrat, Zinksulfat, Zinkcitrat, Zinkchlorid, Zinkacetat, Zinkgluconat, Pyrophosphat, Tripolyphosphat, Hexamethaphosphat und Polyphosphat; 0,01 ~ 10 Gew.-% eines Nährstoffes ausgewählt aus Vitaminen, Calciumgluconat und Mischungen davon; 0,01 ~ 10 Gew.-% eines antimikrobiellen Bestandteils ausgewählt aus Chitosan, Extrakten grünen Tees und Mischungen davon; und 0,01 ~ 10 Gew.-% eines Gewürzes.

7. Verfahren zur Herstellung eines multifunktionellen Kaugummis zum Entfernen von Plaque eines Haustieres, mit den Schritten:
Mischen von 40 ~ 80 Gew.-% an Stärke, ~ 15 Gew.-% an Zucker, 3 ~ 25 Gew.-% an Feuchthaltemitteln und einem Restbestandteil an einem Lösungsmittel zum Erstellen einer Mischung;
Aufblähen und Extrudieren der Mischung in eine gewünschte Form, um ein poröses ausgeformtes Material bereitzustellen;
Bereitstellen einer Beschichtungslösung mit 3 ~ 20 Gew.-% von zumindest einem Beschichtungsmittel ausgewählt aus der Gruppe bestehend aus Gelatine, Xanthan, Natriumcarboxymethylcellulose, Karrageen, Agar, Alginsäure und Methylcellulose und einem Restbestandteil an einem Lösungsmittel;
Beschichten des porösen ausgeformten Materials mit der Beschichtungslösung; und
Trocknen des beschichteten porösen ausgeformten Materials, wobei das poröse ausgeformte Material einen Feuchtigkeitsgehalt von 10 ~ 14% aufweist, und das beschichtete poröse ausgeformte Material eine Oberflächenhärte von 15 ~ 50A und eine Beschichtungsdicke von 0,05 ~ 3 mm aufweist.

8. Verfahren zur Herstellung eines multifunktionellen Kaugummis zum Entfernen von Plaque eines Haustieres nach Anspruch 7, wobei das Feuchthaltemittel zumindest eines ausgewählt aus der Gruppe bestehend aus Palmöl, Olivenöl, Sojabohnenöl, Maisöl, Rapsöl, Reiskernöl, Traubenkernöl, Sonnenblumenkernöl und gehärtetem Palmkernöl ist.

9. Verfahren zur Herstellung eines multifunktionellen Kaugummis zum Entfernen von Plaque eines Haustieres nach Anspruch 7, wobei die Aufblähtemperatur 100 ~ 150°C beträgt.

## Revendications

1. Chewing-gum multifonctionnel pour éliminer la plaque dentaire d'un animal familier, dans lequel un matériau moulé poreux, comprenant 40-80% en poids d'amidon, 2~15% en poids de sucre, 3~25% en poids d'un humectant et un reste d'un solvant, est revêtu par une solution d'enrobage, comprenant 0,5∼20% en poids d'au moins un agent d'enrobage choisi dans le groupe constitué par la gélatine, la gomme xanthane, la carboxyméthylcellulose de sodium, un carraghénane, l'agar-agar, l'acide alginique et la méthylcellulose et un reste d'un solvant, où le matériau moulé poreux possède une teneur en humidité de 10-14%, et le matériau moulé poreux enrobé possède une dureté de surface de 15~50A et une épaisseur d'enrobage de 0,05-3 mm.

2. Chewing-gum multifonctionnel pour éliminer la plaque dentaire d'un animal familier selon la revendication 1, dans lequel le matériau moulé poreux comprend en outre au moins un additif choisi dans le groupe constitué par 1-30% en poids d'au moins un améliorateur de palatabilité choisi parmi la poudre de boeuf, la poudre de porc, la poudre de mouton, la poudre de poulet, le jaune d'oeuf, l'oeuf entier, le blanc d'oeuf et la viande de poulet désossée mécaniquement ; 0,01∼3% en poids d'au moins un agent d'élimination de tartre choisi parmi le nitrate de zinc, le sulfate de zinc, le citrate de zinc, le chlorure de zinc, l'acétate de zinc, le gluconate de zinc, le pyrophosphate, le tripolyphosphate, l'hexamétaphosphate et le polyphosphate ; 0,01∼10% en poids d'un nutriment choisi parmi les vitamines, le gluconate de calcium et des mélanges de ceux-ci ; 0,01~10% en poids d'un composant antimicrobien choisi parmi le chitosane, les extraits de thé vert et des mélanges de ceux-ci ; et 0,01∼10% en poids d'une épice.

3. Chewing-gum multifonctionnel pour éliminer la plaque dentaire d'un animal familier selon la revendication 1, dans lequel l'amidon est au moins un amidon choisi dans le groupe constitué par l'amidon de maïs, l'amidon de pomme de terre, l'amidon de patate douce, l'amidon de tapioca, l'amidon de blé, le gluten, la poudre de riz brun, la poudre d'avoine, l'amidon de soja, et l'amidon d'orge.

4. Chewing-gum multifonctionnel pour éliminer la plaque dentaire d'un animal familier selon la revendication 1, dans lequel le sucre est au moins un sucre choisi dans le groupe constitué par l'isomalto-saccharide, le fructo-oligosaccharide, le galacto-oligosaccharide, l'oligosaccharide de soja, le maltitol, le sorbitol, le mannitol, le lactitol, l'érythritol et le malto-oligosaccharide.

5. Chewing-gum multifonctionnel pour éliminer la plaque dentaire d'un animal familier selon la revendication 1, dans lequel l'humectant est au moins un humectant choisi dans le groupe constitué par l'huile de palme, l'huile d'olive, l'huile de soja, l'huile de maïs, l'huile de colza, l'huile de germe de riz, l'huile de pépins de raisin, l'huile de graines de tournesol, et l'huile durcie de palmiste.

6. Chewing-gum multifonctionnel pour éliminer la plaque dentaire d'un animal familier selon la revendication 1, dans lequel la solution d'enrobage comprend en outre au moins un additif choisi dans le groupe constitué par 1-30% en poids d'au moins un améliorateur de palatabilité choisi parmi la poudre de boeuf, la poudre de porc, la poudre de mouton, la poudre de poulet, le jaune d'oeuf, l'oeuf entier, le blanc d'oeuf et la viande de poulet désossée mécaniquement ; 0,01∼3% en poids d'au moins un agent d'élimination de tartre choisi parmi le nitrate de zinc, le sulfate de zinc, le citrate de zinc, le chlorure de zinc, l'acétate de zinc, le gluconate de zinc, le pyrophosphate, le tripolyphosphate, l'hexamétaphosphate et le polyphosphate ; 0,01∼10% en poids d'un nutriment choisi parmi les vitamines, le gluconate de calcium et des mélanges de ceux-ci ; 0,01~10% en poids d'un composant antimicrobien choisi parmi le chitosane, les extraits de thé vert et des mélanges de ceux-ci ; et 0,01∼10% en poids d'une épice.

7. Méthode de fabrication d'un chewing-gum multifonctionnel pour éliminer la plaque dentaire d'un animal familier, comprenant les étapes consistant à :
mélanger 40-80% en poids d'amidon, 2-15% en poids de sucre, 3-25% en poids d'humectants et un reste d'un solvant, afin de préparer un mélange ;
expanser et extruder le mélange en une forme souhaitée afin de fournir un matériau moulé poreux ;
fournir une solution d'enrobage comprenant 3-20% en poids d'au moins un agent d'enrobage choisi dans le groupe constitué par la gélatine, la gomme xanthane, la carboxyméthylcellulose de sodium, un carraghénane, l'agar-agar, l'acide alginique et la méthylcellulose et un reste d'un solvant ;
revêtir le matériau moulé poreux par la solution d'enrobage ; et
sécher le matériau moulé poreux enrobé ;
dans laquelle le matériau moulé poreux possède une teneur en humidité de 10-14%, et le matériau moulé poreux enrobé possède une dureté de surface de 15~50A et une épaisseur d'enrobage de 0,05-3 mm.

8. Méthode de fabrication d'un chewing-gum multifonctionnel pour éliminer la plaque dentaire d'un animal familier selon la revendication 7, dans laquelle l'humectant est au moins un humectant choisi dans le groupe constitué par l'huile de palme, l'huile d'olive, l'huile de soja, l'huile de maïs, l'huile de colza, l'huile de germe de riz, l'huile de pépins de raisin, l'huile de graines de tournesol, et l'huile durcie de palmiste.

9. Méthode de fabrication d'un chewing-gum multifonctionnel pour éliminer la plaque dentaire d'un animal familier selon la revendication 7, dans laquelle la température d'expansion est de 100~150°C.
